Europäisches Patentamt

European Patent Office

Office européen des brevets

(11) Publication number: **0 396 845**
**A1**

(12) # EUROPEAN PATENT APPLICATION

(21) Application number: **89830191.6**

(22) Date of filing: **08.05.89**

(51) Int. Cl.5: **B27G 11/00, B05C 11/10, G05B 19/12**

(43) Date of publication of application:
**14.11.90 Bulletin 90/46**

(84) Designated Contracting States:
**DE ES FR IT**

(71) Applicant: **Basso, Antonio**
**Viale Ferraris 22**
**I-30036 Santa Maria di Sale (Venezia)(IT)**

(72) Inventor: **Cenedese, Gaetano**
**Via S. Luca 2**
**Colfosco (Treviso)(IT)**

(74) Representative: **Sassatelli, Franco T., Dr.**
**c/o INIP via Ruggi 5**
**I-40137 Bologna(IT)**

(54) **Automatic device for glue injection into panels to form parts of furniture.**

(57) The panel, transported by the plane conveyor (A), passes under an assembly of electric sensor (B), already arranged in advance according to the working code, as required by the relevant manufacturing, which establishes the setting to work of the master injection groups (either C or D) as well as of the secondary ones (E or F or G) concerned in the above manufacturing. When in position, the glue is injected in quantities and at set times established by the working code. As soon as this operation is accomplished, all groups that have been working are set to zero. When a pre-stored program has been carried out on a panel, the passing of the panel under an electric sensor (3 or 4), annuls the code and prearranges the assembly of electric sensors (B) to form a new code for the subsequent panel.

EP 0 396 845 A1

*FIG.1*

Xerox Copy Centre

## Automatic device for glue injection into panels to form parts of furniture.

The invention refers to an automatic device, to properly arrange in advance for the operation of carry out, performing the glue injection on the bounding points of panels which advance of a line, and to be particularly used in working lines for composing furniture.

At present, to inject glue in working succesion into the introduction seats of the different binding points, the operator must avail himself of means with manual practicability which, beside causing labour costs, slows down manufacturing too as well as difformities in the glue distribution which causes diversities in the binding condition and a waste material too.

Essentially the device uses: a panel belt conveyor A; a group of electric sensors B which individuate the panel according to its length features or to working points, and which compose the working code, according to which any subsequent operation will be carried out through a PLC; two master glue injection groups C and D; secondary glue injection groups E, F and G; locating checking devices 1 and 2, as well electric sensors 3 and 4 which, on the panel passage, annul the coding and arrange the device for the new operation. The code composition, as foreseen in the invention machine, determines any operation which has to be subsequently carried out, establishing which and how many locating checking must be set to work, which and how many injectors have to supply the glue, and which of the two master glue injection groups C and D, with its secondary glue injection groups E, F and G have to carry out the work. The master glue injection groups, either C ord D, will be chosen by the group of electric sensors B which locates the length of the panel and composes a manufacturing code by controlling the start of one group and by excluding the other one. Should the belt conveyor transport a panel which is not identified by the group of electric sensors, a condition which prevents from composing the working code, the same panel will be transported by belt A whereas no group of either master or secondary injectors will start.

While the machine is in operation, the code composed by the group of electric sensors B controls the positioning of one or more checking positioners 1 and 2 which, as soon as the panel is arrived, stops the belt motion and controls the approach of a glue injection group to the panel: this approaching may be but of the master group, of either one or more secondary groups, of either one master group with one or more secondary groups at the same time. The above code then controls the glue injection in the quantity and times established in advance, the zero setting of all working groups as well as the re-start of the belt conveyor which transports the panel to the sebsequent checking according to the previously established code. Moreover, whenever a locating checking stops the panel movement, this one is kept in position through a mobile guide 5 or 6 which leans the panel within a fixed reference guide 7. When all operations established in the code have been carried out, one of the electric sensors 3 and 4 cancels the code and pre-arranges the machine for a new coding. The positioning checkings 2, concerning the mater glue injection group D, can carry out different panel stops for each single checking. The secondary glue injection groups E operate, contrarily to the other ones, during the panel movement and, when this one is stopped for an injection phase established by the code, on one of the other groups, the same code breaks off the glue injection of the said group up to the new start of the panel. Particularly the panel transported by the belt A passes under the group of electric sensors B, arranged in advance according to the work code required by the operation, which establishes the start of the master injection groups C and D as well as of the secondary ones E, F and G. For these interventions, the code established, by the electric sensors B, perform the disposition of the positioning checking 1 and 2 which will stop the panel and give rise to the working sequences which begin with the descent of the said master injection groups C or D and secondary ones E or F or G. As soon as these injectors have reached their position, the glue is injected in the quantity and in the time as establised by the work code. After this operation, all groups that have worked are set to zero and allow the code to pass to the next information. As soon as any established information has been carried out, the panel passes under an electric sensor 3 and 4 and annuls the code arranging the group of electric sensors B to form a new code for the subsequent panel.

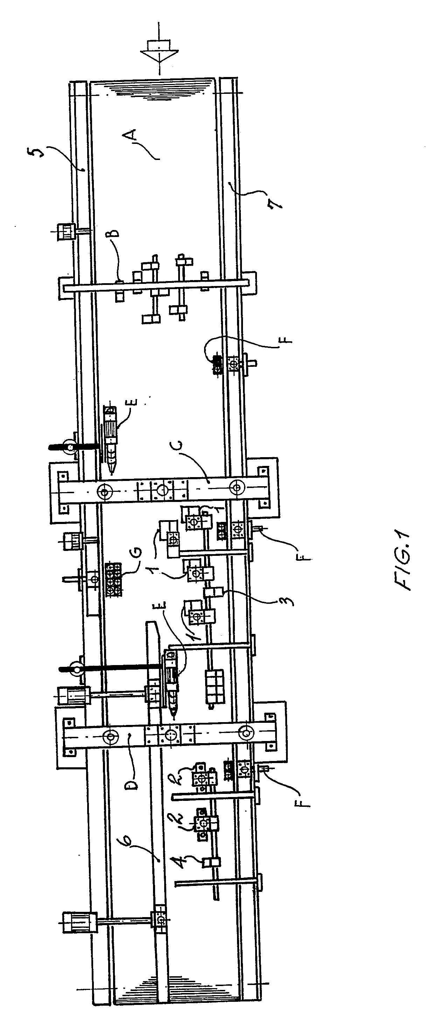

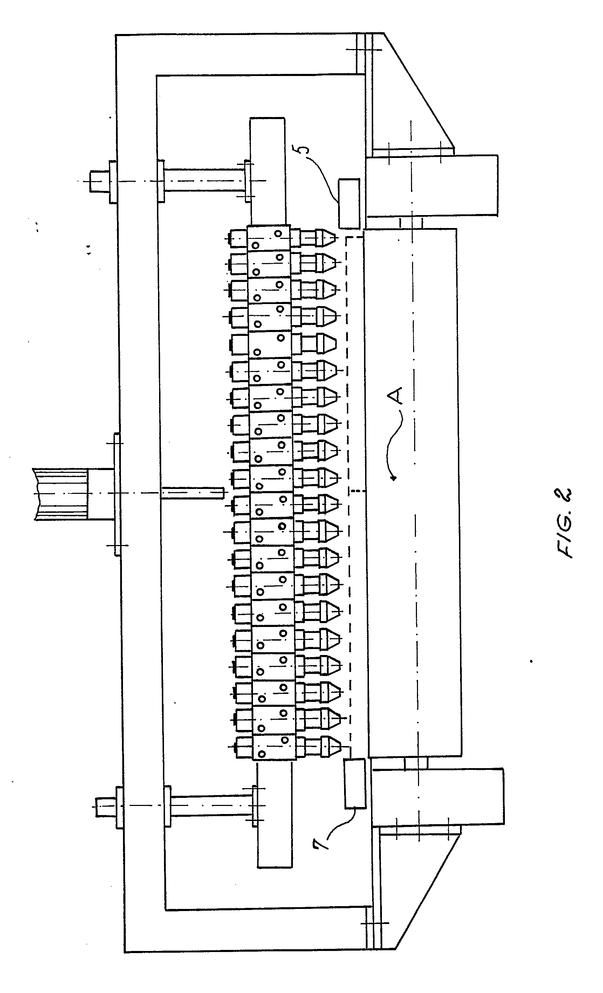

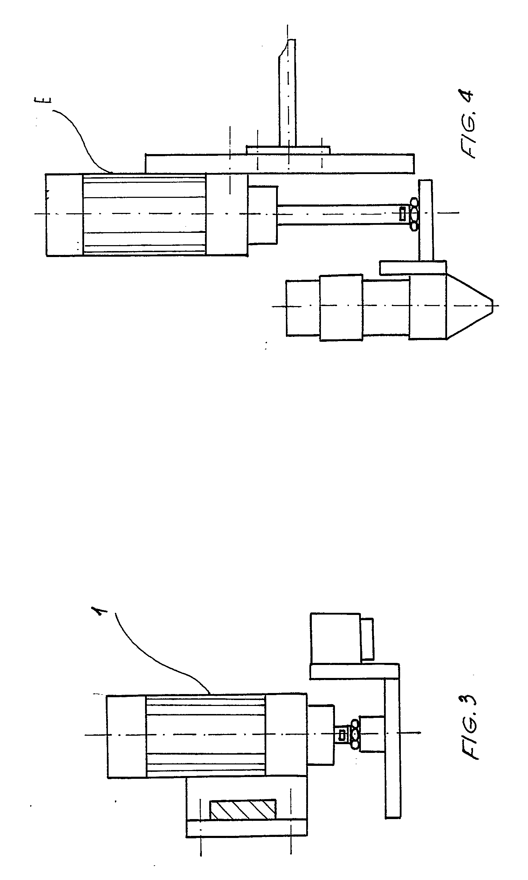

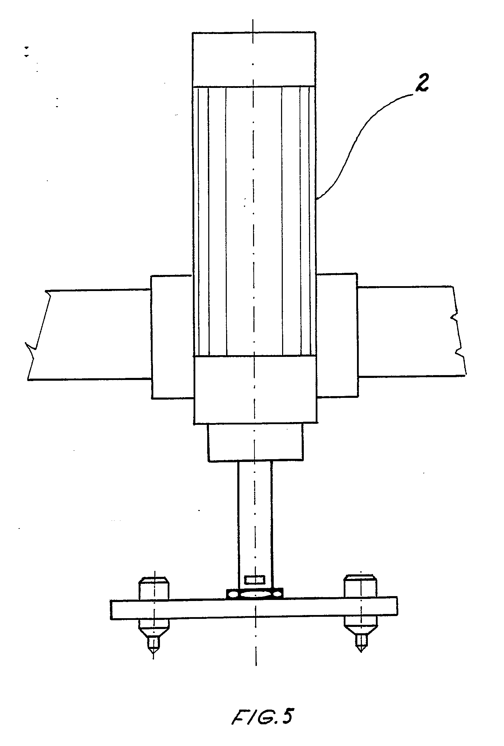

An execution form of the device is illustrated in schematic way and, therefore, not limiting the proceeding in the drawings of tables 1, 2, 3 and 4. In table 1 fig. 1 is the view of the device from above. Fig. 2 in table 2 is the transversal view to show the compartments C and D. In table 3 fig. 3 is the view of the locating checking 1, while fig. 4 is the view of a secondary injection group E. In table 4 fig. 5 is the view of the locating checking 2.

The machine can be equipped in different ways and establised in advance according to different operational requirements.

## Claims

1) Automatic device for glue injection into panels to form parts of furniture, characterized by the fact that the panel, transported by a belt conveyor (A), passes under a group of electric sensors (B) already prepared in advance according to the manufacture code which lets the master (either C or D) and secondary (either E or F or G) injection groups start concerning the above manufacturing. For these interventions, the code consisting of electric sensors (B) controls the location of a positioning checking (either 1 or 2) which stops the panel by starting the operational sequences beginning with the descent of the master (either C or D) and of the secondary (E or F or G) injection groups. As these ones are arrived in position, the glue is injected in the quantities and times as established in advance. When this operation is over, all the groups that have operated are set to zero and allow to the code to pass to the subsequent information. All the established operations being over, the panel passes below an electric sensor (either 3 or 4), cancels the code an pre-arranges the group of electric sensors to form a new code for the subsequent panel.

2) Automatic device for glue injection into panels to form part of furniture, as per claim 1), characterized by the fact that if the belt conveyor carries a panel not identified by the group of electric sensors and, therefore, preventing the composition of the working code, the panel will be transported by the belt conveyor (4) without that any master of secondary injection groups start the operative sequences.

3) Automatic device for glue injection into panels to form parts of furniture, as per claim 1), characterized by the fact that whenever a positioning cheking stops the panel movement, this panel is kept in position by the intervention of a mobile guide (either 5 or 6) which leans the panel against a reference fixed guide (7).

4) Automatic device for glue injection into panels to form part of furniture, as per claim 1), characterized by the fact that when all operations established in advance have been carried out, one of the electric sensors (either 3 or 4) annuls the code and pre-arranges the unit for a new coding.

5) Automatic device for glue injection into panels to form part of furniture, as per claim 1), characterized by the fact that the positioning checking (2) referred to one of the master injection groups (D) can carry out two different stops of the panel for each checking.

5) Automatic device for glue injection into panels to form part of furniture, as per claim 1), characterized by the fact that one of the secondary glue injection groups (E), differently from the other ones, works during the panel movement and, when this panel is stoped for an injection phase on one of the other groups, the code breaks off the glue injection of this group until the panel has been started again.

FIG.1

FIG. 2

E

*FIG. 4*

1

*FIG. 3*

2

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 207 094 (ROLLS-ROYCE) <br> * Page 2, paragraphs 2,3; page 4, paragraph 3; page 6, paragraph 1; page 10, paragraph 1 * <br> --- | 1,2,4 | B 27 G 11/00 <br> B 05 C 11/10 <br> G 05 B 19/12 |
| A | ZWF - ZEITSCHRIFT FÜR WIRTSCHAFTLICHE FERTIGUNG UND AUTOMATISIERUNG, vol. 83, no. 1, January 1988, pages 11-15, Carl Hanser Verlag, München, DE; H.DALLUHN et al.: "Industrieroboter-Zelle zum Auftragen von engtolerierten Kleber- und Schaumdichtungsraupen" <br> * Page 12, left-hand column, pages 3-5 * <br> --- | 1 | |
| A | US-A-4 584 964 (ENGEL) <br> * Column 3, lines 57-66; claim 1 * <br> --- | 1 | |
| A | US-A-4 720 253 (KOENTGES) <br> --- | | |
| A | FR-A-2 359 450 (TOUSSAINT DE VILBISS) <br> --- | | TECHNICAL FIELDS SEARCHED (Int. Cl.5) |
| A | FR-A-2 284 930 (SORMEL) <br> ----- | | B 27 G <br> B 05 C <br> G 05 B |

The present search report has been drawn up for all claims

| Place of search | Date of completion of the search | Examiner |
|---|---|---|
| THE HAGUE | 05-01-1989 | HUGGINS J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)